# EUROPÄISCHE PATENTSCHRIFT

(11) **EP 4 467 323 B1**
(45) Veröffentlichungstag und Bekanntmachung des Hinweises auf die Patenterteilung: **21.01.2026**
(21) Anmeldenummer: 23175728.7
(22) Anmeldetag: 26.05.2023
(51) Int. Cl.: B29C 65/14, B29C 65/20, B29C 65/78, B23K 37/053

(54) **EINSTELLBARER ROHRANSCHLAG**
ADJUSTABLE PIPE STOP
BUTÉE DE TUYAU RÉGLABLE

(43) Veröffentlichungstag der Anmeldung: 27.11.2024
(73) Patentinhaber: Georg Fischer Rohrleitungssysteme AG, 8201 Schaffhausen (CH)
(72) Erfinder: Buergi, Josef, 8240 Thayngen (CH); Engesser, Benedikt, 78073 Hochemmingen (DE); Frommherz, Max, 78462 Konstanz (DE); Gutierrez, Mariano, 8280 Kreuzlingen (CH); Waldraff, Thomas, 78073 Bad Duerrheim (DE); Haessler, Moritz, 79771 Klettgau Griessen (DE)
(74) Vertreter: Fenner, Seraina

(56) Entgegenhaltungen:
- US-A- 5 793 017

## Beschreibung

Die Erfindung betrifft einen Rohranschlag zur Einstellung von Rohrüberständen von zu verschweissenden Rohren in einer Stumpfschweissmaschine, beinhaltend, einen Basis bildenden Halter, wobei der Halter ein Positionierelement zur Befestigung des Halters an einer Stumpfschweissmaschine aufweist.

Beim Verschweissen von Rohren vorzugsweise auf IR-Stumpfschweissmaschinen werden die Rohre in gegenüberliegenden Spannstellen eingespannt und müssen einen exakten Rohrüberstand aufweisen, der dann mit dem Hobel abgehobelt wird. Zum Definieren der axialen Position der Rohrüberstände wird zwischen die Rohrenden bzw. die Spannstellen in der Schweissmaschine ein starrer Block eingelegt an den die Stirnflächen der beiden Rohrenden angestellt werden um die Rohrüberstandslängen zu definieren. Die Rohre werden festgespannt und der Block wird entfernt. Worauf mit dem Hobel die Stirnflächen überhobelt werden, wodurch immer dieselbe Länge vom Rohr abgehobelt wird, ob dies nun notwendig ist oder nicht.

Die EP 0 453 903 zeigt eine IR-Stumpfschweissmaschine mit einem dazwischen bringbaren Anschlag oder Anschlägen, die an den Spanneinheiten vorgesehen sind. Daraus ist gut erkennbar, dass die Rohrüberstände für jedes Rohr und jedes Fitting immer gleich ausfallen.

Die US 5793017 offenbart einen Rohranschlag zur Einstellung von Rohrüberständen von zu verschweissenden Rohren in einer Stumpfschweissmaschine beinhaltend einen Basis bildenden Halter, wobei der Halter ein Positionierelement zur Befestigung an einer Stumpfschweissmaschine aufweist.

Nachteilig hierbei ist, dass die Überstände nicht individuell eingestellt werden können. Das heisst, das z. B. bei einem Fitting der schon sehr genau gefertigt ist, kein geringerer Rohrüberstand eingestellt werden kann, damit nur das Nötigste abgehobelt wird oder z.B. bei einer schräg verlaufenden Stirnseite um dies auszugleichen, ein längerer Rohrüberstand eingestellt werden kann, damit dieser abgetrennt wird. Wodurch unnötig viel Material verschwendet wird wie auch Zeit, wenn so viel abgetrennt werden muss, dass das Rohr mehrfach eingespannt werden muss um einen grösseren Überstand abzutrennen als mit einer Aufspannung möglich ist.

Es ist Aufgabe der Erfindung einen Rohranschlag für eine Stumpfschweissmaschine vorzuschlagen, durch den die Längen der zu verschweissenden Rohrüberstande individuell einstellbar sind und dadurch eine Rohrverbindung wirtschaftlicher hergestellt werden kann.

Diese Aufgabe wird erfindungsgemäss dadurch gelöst, dass der Rohranschlag zwei, an jeweils sich gegenüberliegenden Seiten des Halters, angeordnete Anschlagscheiben aufweist sowie Einstellelemente zur Einstellung der Anschlagscheiben und Arretierelemente zur Arretierung der Anschlagscheiben.

Der erfindungsgemässe Rohranschlag zur Einstellung von Rohrüberständen von zu verschweissenden Rohren in einer Stumpfschweissmaschine vorzugsweise IR-Stumpfschweissmaschine beinhaltet einen basisbildenden Halter, wobei der Halter ein Positionierelement zur Befestigung an einer Stumpfschweissmaschine aufweist. Vorzugsweise ist das Positionierelement als Einrastelement ausgebildet um den Rohranschlag kurzfristig zum Einrichten der Rohrüberstände an der Schweissmaschine positionsgenau anzuordnen und einfach und schnell wieder zu entfernen. Dadurch ist der Rohranschlag einfach und schnell zwischen die Spannstellen einer Schweissmaschine bringbar und auch einfach und schnell wieder entfernbar. Der Rohranschlag weist zwei Anschlagscheiben auf, wobei jeweils eine Anschlagscheibe an jeweils einer der sich gegenüberliegenden Seite des Halters angeordnet ist. Zudem beinhaltet der Rohranschlag Einstellelemente zur Einstellung der Anschlagscheiben und Arretierelemente zur Arretierung der Anschlagscheiben. Durch die axial einstellbaren Anschlagscheiben wird der Rohrüberstand individuell einstellbar. Die zu verschweissenden Rohre werden an die entsprechend eingestellten Anschlagscheiben angeschlagen und dadurch wird die Länge des gewünschten Rohr- oder auch Fittingüberstands erreicht, welcher anschliessend mittels des Hobels abgehobelt wird. So kann ein ganz geringer Überstand abgehobelt werden wie auch ein langer Überstand ohne das Rohr mehrfach einspannen zu müssen.

Die Arretierelemente sind vorzugsweise am Halter angeordnet und ragen durch den Halter hindurch auf die Anschlagscheiben.

Vorzugsweise sind die beiden Anschlagscheiben individuell voneinander axial verfahrbar angeordnet. Die auf den beiden sich gegenüberliegenden Seiten des Halters angeordneten Anschlagscheiben sind separat voneinander einstellbar. Das heisst, dass z.B. eine Anschlagscheibe einen Millimeter mehr nach aussen axial verschoben werden kann als die andere. Vorzugsweise sind die Anschlagscheiben rotierbar und lassen sich dadurch in axialer Richtung stufenlos verschieben bzw. einstellen.

Als vorteilhaft hat sich gezeigt, wenn die Anschlagscheiben jeweils bis zu 8mm axial vom Halter nach aussen verschoben werden können.

Als vorteilhaft hat sich gezeigt, wenn die Anschlagscheiben mittels eines Gewindes an den Einstellelementen verstellbar angeordnet sind. Durch die Gewindeverbindung zwischen der jeweiligen Anschlagscheibe und dem Einstellelement wird eine stufenlose axiale Verschiebung der Anschlagscheiben erzielt. Entsprechend der gewünschten Anzahl von Drehungen um eine gewünschte axiale Verschiebung zu erreichen wird die Gewindesteigung gewählt, die zwischen den Anschlagscheiben und dem Einstellelement eingesetzt wird.

Vorzugsweise ist das Einstellelement starr mit dem Halter verbunden und die Anschlagscheibe lässt sich auf dem Gewinde des Einstellelements rotieren.

Als vorteilhaft, um eine möglichst feineinstellbare axiale Verschiebung der Anschlagscheiben zu erreichen, haben sich Feingewinde gezeigt.

Es ist vorteilhaft wenn die Anschlagscheiben zylindrisch ausgebildet sind. Vorzugsweise weist die zylindrische Mantelfläche eine Struktur auf, wodurch sie einen besseren Gripp zum manuellen Rotieren der Anschlagscheibe aufweist.

Als vorteilhaft hat sich gezeigt, wenn die Einstellelemente als zylinderförmige Bolzen mit einem Gewinde ausgebildet sind. Die Bolzen sind am Halter, sich abgewandt, an den sich gegenüberliegenden Seiten angeordnet.

Als vorteilhafte Ausführung hat sich gezeigt, wenn der Halter an zwei sich gegenüberliegenden Seiten jeweils eine zylinderförmige Vertiefung aufweist. Die Vertiefung entspricht ungefähr der Grösse der Anschlagscheibe bzw. hat einen leicht grösseren Durchmesser in der die Anschlagscheibe axial verschiebbar bzw. verfahrbar angeordnet ist.

Vorzugsweise sind die Anschlagscheiben in zylinderförmigen Vertiefungen im Halter angeordnet. Dadurch kann die axiale Position der Anschlagscheibe besser ermittelt werden.

Als vorteilhafte Ausführung hat sich gezeigt, wenn die Arretierelemente als Magnetarretierungen ausgebildet sind. Die Arretierungen sind am Halter angeordnet, vorzugsweise auf der Höhe der Vertiefung und ragen durch eine Bohrung in der Wandung hindurch und wirken auf die Mantelflächen der Anschlagscheiben.

Es ist vorteilhaft, wenn eine Skala zur Einstellung der axialen Position der Anschlagscheiben am Rohranschlag angeordnet ist. Vorzugsweise befindet sich die Skala an der Anschlagscheibe und korrespondierende Indikatoren am Halter oder umgekehrt um die Position der Anschlagscheibe bzw. schlussendlich die Länge des Rohrüberstands anzuzeigen.

Als vorteilhaft hat sich gezeigt, dass der Rohranschlag symmetrisch ausgebildet ist, vorzugsweise spiegelsymmetrisch.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Explosionsdarstellung des erfindungsgemässen Rohranschlags,
- Fig. 2: eine dreidimensionale Ansicht eines erfindungsgemässen Rohranschlags,
- Fig. 3: einen Rohranschlag befestigt an einer Stumpfschweissmaschine und
- Fig. 4: eine Schnittansicht durch eine Schweissmaschine mit angeordnetem Rohranschlag.

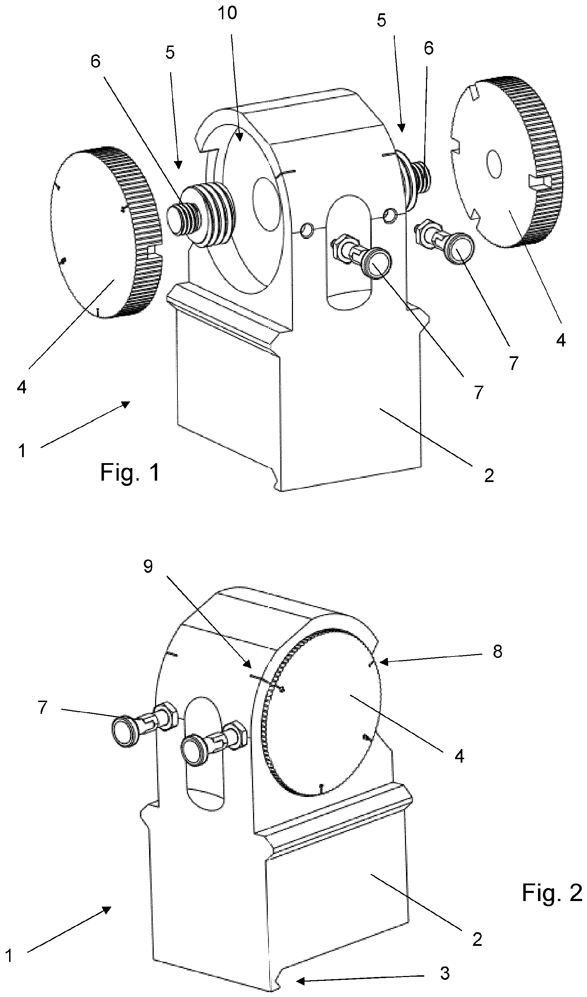

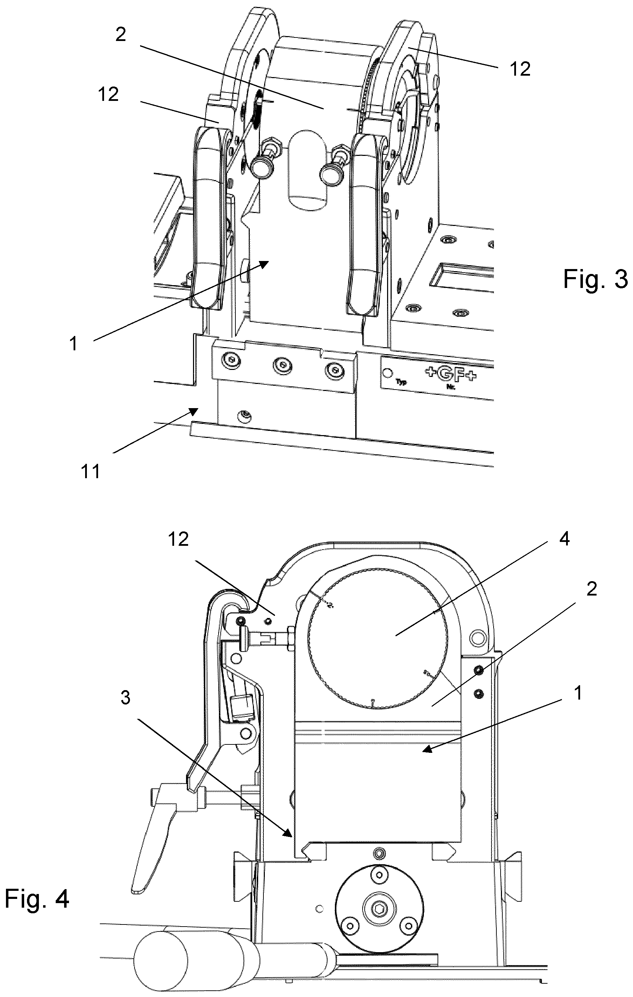

Die in Fig. 1 dargestellte Zeichnung zeigt eine Explosionsansicht eines erfindungsgemässen Rohranschlags 1. Der Rohranschlag 1 dient dem Einstellen von Rohrüberständen von in Stumpfschweissmaschinen eingespannten Rohren die miteinander zu verschweissen sind oder von Fittings. Der Rohranschlag 1 beinhaltet einen Halter 2 der als Basis dient. Der Halter 2 weist ein Positionierelement 3 auf, das dem einfachen Positionieren in einer Schweissmaschine 11 dient. In Fig. 4 ist die Positionierung mittels des Positionierelements 3 in einer Schweissmaschine 11 gut erkennbar. Ebenfalls gut ersichtlich ist in Fig. 3, dass der erfindungsgemässe Rohranschlag 1 zwischen den Spannstellen 12 der Schweissmaschine 11 angeordnet ist. Der Rohranschlag 1 weist zudem zwei Anschlagscheiben 4 auf, die auf zwei sich gegenüberliegenden Seiten des Halters 2 angeordnet sind. Zudem beinhaltet der erfindungsgemässe Rohranschlag 1 Einstellelement 5 an denen die Anschlagscheiben 4 angeordnet sind. Die Anschlagscheiben 4 und die Einstellelemente 5 sind mittels Gewinde 6 miteinander verbunden, wodurch sich die Anschlagscheiben 4 axial verschieben. Die beiden Anschlagscheiben 4 sind unabhängig voneinander betätigbar und somit auch auf unterschiedliche Distanzen einstellbar. Fig. 3 zeigt den Rohranschlag 1 in der Schweissmaschine angeordnet bzw. kurzfristig darin positionsgenau platziert bis die Rohrenden oder Fittingsenden auf die gewünschte Länge eingestellt sind. Danach kann der Rohranschlag 1 wieder einfach aus der IR-Stumpfschweissmaschine 11 entfernt werden. In den Figuren ist zudem ersichtlich, dass der erfindungsgemässe Rohranschlag 1 Arretierungselemente 7 aufweist. Diese dienen dazu, dass wenn die Anschlagscheiben 4 auf die gewünschte Länge des Rohrüberstands eingestellt sind, sie arretiert werden können. Vorzugsweise werden dazu Magnetarretierungen verwendet, wobei auch andere Arretierungsvorrichtungen denkbar sind. Als vorteilhaft hat sich auch gezeigt, wenn eine Skala 8 und entsprechende Indikatoren 9 auf dem Halter 2 und den Anschlagscheiben 4 angeordnet sind, die die Rohrüberstandslänge anzeigen. Ebenso vorteilhaft weist die Halterung 1 Vertiefungen 10 auf in denen die Anschlagscheiben 4 angeordnet sind.

### Bezugszeichenliste

- 1: Rohranschlag
- 2: Halter
- 3: Positionierelement
- 4: Anschlagscheibe
- 5: Einstellelement
- 6: Gewinde
- 7: Arretierungselement
- 8: Skala
- 9: Indikator
- 10: Vertiefung
- 11: IR-Stumpfschweissmaschine
- 12: Spannstelle

## Patentansprüche

1. Rohranschlag (1) zur Einstellung von Rohrüberständen von zu verschweissenden Rohren in einer Stumpfschweissmaschine (11) beinhaltend einen Basis bildenden Halter (2), wobei der Halter (2) ein Positionierelement (3) zur Befestigung an einer Stumpfschweissmaschine (11) aufweist, **dadurch gekennzeichnet dass** der Rohranschlag (1) zwei, an jeweils sich gegenüberliegenden Seiten des Halters (2), angeordnete Anschlagscheiben (4) aufweist sowie Einstellelemente (5) zur Einstellung der Anschlagscheiben (4) und Arretierelemente (7) zur Arretierung der Anschlagscheiben (4).

2. Rohranschlag (1) nach Anspruch 1, **dadurch gekennzeichnet, dass** die beiden Anschlagscheiben (4) individuell voneinander axial verfahrbar angeordnet sind.

3. Rohranschlag (1) nach einem der Ansprüche 1 oder 2, **dadurch gekennzeichnet, dass** die Anschlagscheiben (4) mittels eines Gewindes (6) an den Einstellelementen (5) verstellbar angeordnet sind.

4. Rohranschlag (1) nach einem der Ansprüche 1 bis 3, **dadurch gekennzeichnet, dass** die Anschlagscheiben (4) zylindrisch ausgebildet sind.

5. Rohranschlag nach einem der Ansprüche 1 bis 4, **dadurch gekennzeichnet, dass** die Einzelelemente als zylinderförmige Bolzen mit einem Gewinde ausgebildet sind.

6. Rohranschlag (1) nach einem der Ansprüche 1 bis 5, **dadurch gekennzeichnet, dass** der Halter (2) an zwei sich gegenüberliegenden Seiten jeweils eine zylinderförmige Vertiefung (10) aufweist.

7. Rohranschlag (1) nach einem der Ansprüche 1 bis 6, **dadurch gekennzeichnet, dass** die Anschlagscheiben (4) in zylinderförmigen Vertiefungen (10) im Halter (2) angeordnet sind.

8. Rohranschlag (1) nach einem der Ansprüche 1 bis 7, **dadurch gekennzeichnet, dass** die Arretierelemente (7) als Magnetarretierungen ausgebildet sind.

9. Rohranschlag (1) nach einem der Ansprüche 1 bis 8, **dadurch gekennzeichnet, dass** eine Skala (8) zur Einstellung der axialen Position der Anschlagscheiben (4) am Rohranschlag (1) angeordnet ist.

10. Rohranschlag (1) nach einem der Ansprüche 1 bis 8, **dadurch gekennzeichnet, dass** der Rohranschlag (1) symmetrisch ausgebildet ist.

## Claims

1. Pipe stop (1) for setting the pipe projections of pipes to be welded in a butt-welding machine (11), comprising a holder (2) forming a base, wherein the holder (2) has a positioning element (3) for fastening to a butt-welding machine (11), **characterized in that** the pipe stop (1) has two stop discs (4) arranged on mutually opposite sides of the holder (2), and adjustment elements (5) for adjusting the stop discs (4) and locking elements (7) for locking the stop discs (4).

2. Pipe stop (1) according to Claim 1, **characterized in that** the two stop discs (4) are arranged so as to be axially displaceable independently of one another.

3. Pipe stop (1) according to any one of Claims 1 or 2, **characterized in that** the stop discs (4) are adjustably mounted on the adjustment elements (5) by means of a thread (6).

4. Pipe stop (1) according to any one of Claims 1 to 3, **characterized in that** the stop discs (4) are of cylindrical design.

5. Pipe stop (1) according to any one of Claims 1 to 4, **characterized in that** the adjustment elements (5) are designed as cylindrical pins with a thread.

6. Pipe stop (1) according to any one of Claims 1 to 5, **characterized in that** the holder (2) has, on two mutually opposite sides, a cylindrical recess (10) in each case.

7. Pipe stop (1) according to any one of Claims 1 to 6, **characterized in that** the stop discs (4) are arranged in cylindrical recesses (10) in the holder (2).

8. Pipe stop (1) according to any one of Claims 1 to 7, **characterized in that** the locking elements (7) are formed as magnetic locking means.

9. Pipe stop (1) according to any one of Claims 1 to 8, **characterized in that** a scale (8) for setting the axial position of the stop discs (4) is arranged on the pipe stop (1).

10. Pipe stop (1) according to any one of Claims 1 to 8, **characterized in that** the pipe stop (1) is of symmetrical design.

## Revendications

1. Butée de tube (1) pour régler les dépassements de tubes de tubes à souder dans une machine de soudage bout à bout (11), contenant un support (2) formant une base, le support (2) présentant un élément de positionnement (3) pour la fixation à une machine de soudage bout à bout (11), **caractérisée en ce que** la butée de tube (1) présente deux disques de butée (4) agencés sur des côtés opposés du support (2) ainsi que des éléments de réglage (5) pour régler les disques de butée (4) et des éléments de blocage (7) pour bloquer les disques de butée (4).

2. Butée de tube (1) selon la revendication 1, **caractérisée en ce que** les deux disques de butée (4) sont agencés de manière à pouvoir être déplacés axialement l'un par rapport à l'autre.

3. Butée de tube (1) selon l'une des revendications 1 ou 2, **caractérisée en ce que** les disques de butée (4) sont agencés de manière réglable sur les éléments de réglage (5) au moyen d'un filetage (6).

4. Butée de tube (1) selon l'une des revendications 1 à 3, **caractérisée en ce que** les disques de butée (4) sont réalisés sous forme cylindrique.

5. Butée de tube selon l'une des revendications 1 à 4, **caractérisée en ce que** les éléments individuels sont réalisés sous forme de boulons cylindriques avec un filetage.

6. Butée de tube (1) selon l'une des revendications 1 à 5, **caractérisée en ce que** le support (2) présente un renfoncement cylindrique (10) sur chacun de ses deux côtés opposés.

7. Butée de tube (1) selon l'une des revendications 1 à 6, **caractérisée en ce que** les disques de butée (4) sont agencés dans des renfoncements cylindriques (10) dans le support (2).

8. Butée de tube (1) selon l'une des revendications 1 à 7, **caractérisée en ce que** les éléments de blocage (7) sont réalisés sous forme de blocages magnétiques.

9. Butée de tube (1) selon l'une des revendications 1 à 8, **caractérisée en ce qu'**une échelle (8) pour le réglage de la position axiale des disques de butée (4) est agencée sur la butée de tube (1).

10. Butée de tube (1) selon l'une des revendications 1 à 8, **caractérisée en ce que** la butée de tube (1) est réalisée sous forme symétrique.
